# EUROPEAN PATENT SPECIFICATION

(11) **EP 2 605 648 B1**
(45) Date of publication and mention of the grant of the patent: **10.06.2015**
(21) Application number: 11817780.7
(22) Date of filing: 16.08.2011
(51) Int. Cl.: A01N 25/28, A01N 25/02, A01N 43/40, A01N 47/36, A01P 13/00

(54) **HERBICIDAL COMPOSITIONS**
HERBIZIDZUSAMMENSETZUNGEN
COMPOSITIONS HERBICIDES

(30) Priority: 17.08.2010 GB 201013782
(43) Date of publication of application: 26.06.2013
(73) Proprietor: Rotam Agrochem International Co., Ltd, Chai Wan, Hong Kong (CN)
(72) Inventor: BRISTOW, James Timothy, Chai Wan, Hong Kong (CN)
(74) Representative: Akers, Noel James
(86) International application number: PCT/CN2011/078474
(87) International publication number: WO 2012/022253

(56) References cited:
- EP-A1- 1 844 653
- WO-A2-2008/089890
- WO-A2-2009/152827
- JP-A- 2009 209 101
- US-A1- 2009 226 496
- US-B1- 6 485 736

## Description

The present invention relates to herbicidal compositions and their use. The present invention is particularly concerned with the provision of compositions of pyridinoxy acid herbicides, especially fluroxypyr, and sulphonyl ureas. The invention also relates to use of the same in controlling unwanted plant growth.

Fluroxypyr is a pyridinoxy acid herbicide used to control annual and perennial broad leaf weeds and woody brush. Formulations of fluroxypyr are known and are available commercially. One commercial formulation of fluroxypyr is a solvent-based emusifiable concentrate (EC). The formulation is typically prepared by dissolving the floroxypyr active ingredient in an inert organic liquid solvent, together with an appropriate emulsifier system. Mixing the resulting combination with water, spontaneously forms an oil in water emulsion of the fluroxypyr/solvent solution.

Sulfonylureas (also known as 'sulfonamides' and referred to as 'SUs', which terms will be used in the present specification) are another class of herbicides with different biological activity to fluroxypyr.

Since fluroxypyr and SUs are chemically and biologically different, and even more importantly physiochemically different ( having different solubility properties, vapour pressure, melting point, etc), the formulation of both classes of compounds together in a single, effective composition is a challenge. Commercial products combining fluroxypyr and SUs are known. In particular, it is known to provide a twin pack containing water-dispersible granules of one or more SUs, in particular thifensulfuron-methyl and tribenuron methyl, together with an emulsifiable concentrate formulation of fluroxypyr dissolved in petroleum distillates.

The possibility of combining both classes of the aforementioned herbicides into a single product formulation has the potential to offer significant advantages compared with the known combinations, especially in the field of formulations for the treatment of cereal crops. Accordingly, it would be most advantageous of a single herbicidal formulation of both of the aforementioned general classes of compounds could be provided.

WO 2009/152827 discloses a suspoemulsion formulation of certain SUs with fluroxypyr. This formulation has the advantage of combining the spectrum of activity of the SUs with that of fluroxypyr. The suspoemulsion is formed by suspending one or more sulfonylureas in an oil and forming an emulsion concentrate of fluroxypyr dissolved in the oil.

EP 1844653 describes an agrochemical formulation containing a suspension of microcapsules in an aqueous phase, the formulation being characterized in that the active ingredient fluroxypyr is retained within the microcapsules and one or more sulfonylureas are present outside the microcapsules. For the incorporation of both sulfonylureas and microcencapsulated fluroxypyr into the same formulation, the sulfonylureas are milled to form an aqueous suspension concentrate (SC). The suspension of encapsulated fluroxypyr is added to the suspension concentrate of the SUs, to obtain a so-called ZC formulation, in which suspensions of both microencapsulated fluroxypyr and milled sulfonylureas are present in the liquid phase. The ZC formulation is then spray dried at an elevated temperature (below the melting point of fluroxypyr, 57.5°C) to obtain a water dispersible formulation (WG (CS)).

There is a need for an improved formulation combining fluroxypyr and one or more sulfonylureas. It has now been found to provide an improved ZC formulation of fluroxypyr or other similar compounds in combination with one or more sulfonylureas, with improved properties, in particular improved stability, ease of manufacture and a low wet sieve residue. The ZC formulation is of particular use in treating unwanted plant growth in cereal crops.

According to a first aspect of the present invention, there is provided a herbicidal composition comprising microcapsules containing a solution of at least one herbicidally active compound that is solid at room temperature and with a melting point below 190°C, said herbicidally active compound being other than a sulfonylurea, in a polyhydric alcohol ester solvent system; the microcapsules being suspended in a continuous phase of a polyhydric alcohol solvent system having suspended therein finely divided particles of one or more sulfonylureas.

It has surprisingly been found that the use of a polyhydric alcohol ester solvent system both within the microcapsules as solvent for a herbicidally active compound that is solid at room temperature and with melting point below 190°C, such as fluroxypyr, and a polyhydric alcohol ester solvent system for suspension of both the microcapsules and the one or more finely divided sulfonyl ureas provides significant advantages. In particular, it has been found that the a herbicidally active compound that is solid at room temperature and with melting point below 190°C, such as fluroxypyr, is better retained within the microcapsules, giving rise to a wet sieve residue of fluroxypyr that is significantly lower than the formulations of the prior art. Further, it has been found that the unencapsulated active ingredients, in particular the one or more sulfonylureas, are substantially invisible to the naked eye in the formulation. In addition, the formulations have been found to offer improved stability compared with known formulations of the aforementioned active ingredients.

The polyhydric alcohol ester solvent system present within the microcapsules and containing a herbicidally active compound that is solid at room temperature and with melting point below 190°C, such as fluroxypyr, may be the same or different to the polyhydric alcohol ester solvent system in which the microcapsules and finely divided sulfonylureas are suspended. Preferably, the polyhydric alcohol ester solvent system within the microcapsules is the same as that of the continuous phase in which the microcapsules are suspended.

References herein to a polyhydric alcohol ester solvent system are to a solvent containing one or more polyhydric alcohol esters. The polyhydric alcohol ester solvent system may comprise other solvents. More preferably, the polyhydric alcohol ester solvent system consists of one or more polyhydric alcohol esters. Polyhydric alcohol esters for use in the formulation of the present invention are known in the art and are commercially available. Preferably, the polyhydric alcohols esters have the following general formula:

R₂ - [(R₁ - O)ₙ - R₁] - R₃

in which
R₁ is a straight-chain or branched chain alkyl group;
R₂ is a straight-chain or branched chain alkyl ester group, preferably a C₁ to C₆ alkyl group, a phenyl ester group, a hydroxyl-containing alkyl preferably a C₁ to C₆ alkyl group or hydroxyl-containing phenyl group; polyhydric-containing alkyl preferably a C₁ to C₆ alkyl group or polyhydric-containing phenyl group;
R₃ is a straight-chain or branched chain alkyl ester group, preferably a C₁ to C₆ alkyl group, a phenyl ester group, a hydroxyl-containing alkyl preferably a C₁ to C₆ alkyl group or hydroxyl-containing phenyl group; polyhydric-containing alkyl preferably a C₁ to C₆ alkyl group or polyhydric-containing phenyl group;
and n is an integer, preferably and integer from 0 to 20, more preferably from 0 to 10.

Examples of suitable polyhydric alcohol esters include dipropylene glycol dibenzoate, diethylene glycol dizenzoate, ethylene glycol diacetate, diethylene glycol diacetate, triethylene glycol diacetate, stearic acid pentaerythritol ester, polyethylene glycol 400 distearic acid ester, polyethylene glycol 6000 distearic acid ester, glycerol triacetate, glycol diacetate.

As noted above, the microcapsules contain a solution of a herbicidally active compound that is solid at room temperature and with melting point below 190°C, with the proviso that the said compounds are not sulfonylureas. It has been found that the pyridinoxy acid herbicides are particularly suitable for microencapsulation and formulation according to the present invention, with fluroxypyr being a particularly preferred active ingredient. The formulations of the present invention will be further described in general terms with reference to fluroxypyr as the microencapsulated active ingredient. However, it is to be understood that references hereafter to fluroxypyr include references to other herbicidally active compounds that are solid at room temperature, have a melting point below 190°C, and are soluble in sufficient quantities in a polyhydric alcohol ester solvent system, thus allowing them to be formulated in accordance with the present invention.

Fluroxypyr is the common name of 4-amino-3,5-dichloro-6-fluoro-2-pyridyloxyacetic acid, a compound known to be herbicidally active and commercially available. The formulation of the present invention may comprise fluroxypyr as the sole herbicidally active ingredient within the microcapsules. Alternatively, one or more further active ingredients may be present within the microcapsules of the formulation.

The formulation may comprise fluroxypyr in any suitable amount to provide the required level of activity, when applied to a locus for the control of plant growth. Preferably, the formulation contains fluroxypyr in an amount of at least 10% by weight, more preferably at least 15%, still more preferably at least 20%.

The microcapsules may contain a solution consisting of one or more polyhydric alcohol esters and fluoroxypyr. Other components may be included in the solvent system, as required. Other components that may be present in the solution are known in the art and include surfactants, stabilizers and the like.

In particular, antioxidants may be included in the solvent system within the microcapsules. As described in more detail below, preparation of the formulation may require heating of the formulation to cure the polymers walls of the microcapsules. Heating the formulation may increase the rate of oxidation of the active components. Accordingly, one or more antioxidants may be included. Suitable antioxidants are known in the art and are commercially available. Examples include butylated hydroxytoluene (BHT) and butylated hydroxyanisole (BHA). The antioxidant may be present in any suitable amount to reduce or prevent oxidation of the active ingredient and maintain its stability. The amount of antioxidant may be in the range of from 0.005 to 1.0% of the weight of the microcapsules, more preferably from 0.01 to 0.05% by weight.

The size of the microcapsules may controlled by a number of factors in the preparation of the composition of this invention. In particular, the size of the microcapsules may be controlled by including on or more further components in the water-immiscible liquid phase within the microcapsules, in particular one or more surfactants. The hydrophile-lipophile balance (HLB) of the surfactants employed can influence the size of the microcapsules formed in the composition, with surfactants or surfactant combinations having a lower HLB giving rise to microcapsules having a lower diameter. Suitable oil-soluble surfactants are known and available commercially, for example Atlox 4912, an A-B-A block copolymer surfactant having a low HLB of about 5.5. Other block copolymer surfactants may be used, in particular those composed of polyglycol, for example polypropylenglycol, and hydroxylated polyfatty acids. The surfactants may be present in any suitable amount to impart the required particle size to the microcapsules during preparing of the composition. A preferred concentration in the water-immiscible phase is from 1 to 30%, more preferably about 5 to 25% by weight of the microcapsules.

The solvent system within the microcapsules may further comprise one or more oil-soluble cross-linking agents. Suitable cross-linking agents include carbamides, such as acetylene carbamide and derivatives thereof, fats or resins, such as the copolymerization product of styrene and maleic anhydride. Such cross-linking agents are known in the art and are commercially available, for example Powder Link 1174 (1,3,4,6-tetrakis(methoxymethyl)glycoluril). The cross-linking agent and the amount present may be used to control the porosity of the polymer wall of the microcapsules. Preferably, the composition comprises the cross-linking agent in an amount of from 0.1 to 20%, more preferably from 0.5 to 15% by weight of the microcapsules.

The polyhydric alcohol ester solvent system within the microcapsules contains the solvent, in particular one or more polyhydric alcohol esters, in sufficient amount to dissolve the required amount of fluroxypyr. Preferably, the weight ratio of fluroxypyr to the polyhydric alcohol ester solvent is from 1:10 to10:1, more preferably from 1:5 to 5:1, still more preferably from 3:1 to 1:3. A ratio of about 2:1 has been found to be particularly suitable.

The liquid phase within the microcapsules preferably contains at least 20% by weight fluroxypyr, more preferably at least 40%, still more preferably at least 60% by weight fluroxypyr. Fluroxypyr may be present in the encapsulated material in an amount of from 1% to 95% by weight, more preferably from 1% to 90%, still more preferably from 5% to 90% by weight.

The polyhydric alcohol ester solvent is preferably present in the liquid within the microcapsules in an amount of at least 10% by weight, more preferably at least 20% by weight, still more preferably at least 30% by weight.

The solution of fluroxypyr in the polyhydric alcohol ester solvent system is contained within the microcapsules. The microcapsules may be formed from any suitable polymer. The polymer of the microcapsules is porous, thereby allowing for the controlled release of the fluroxypyr active ingredient from within the microcapsules. The rate of release of the active ingredient from the microcapsules may be controlled in known manner, for example by the appropriate selection of the polymers used to prepare the microcapsules, selection of the size of the microcapsules, the porosity of the polymer, and the presence of components within the microcapsules. Suitable polymer systems for use in the microencapsulation formulation of the present invention are known in the art. The polymer forming the wall of the microcapsules is preferably formed by interfacial polymerization. Examples of suitable polymers to form the microcapsules include porous condensate polymers of one or more of a polyurea, polyamide or amide-urea copolymer.

Polyureas are preferred polymers for the microcapsules. Polyureas may be formed by the interfacial polymerization of an isocyanate with an amine. Suitable isocyanates for forming the polyureas are known in the art and are commercially available, including both aromatic isocyanates and aliphatic isocyanates, for example polymethylene polyphenyl isocyanates (PMPPI), methylene diphenyl isocyanate (MDI), polymeric methylene diphenyl isocyanate (PADI), and toluene diisocyanate (TDI). The amine may be a mono- or polyfunctional amine. Suitable amines for forming the polymeric wall of the microcapsules are known and the art and are commercially available, including ethylenediamine (EDA), diethyltriamine (DETA), triethylenetetramine (TETA), 1,6-hexamine (HAD), and triethyleamine (TEA).

As noted above, the size of the microcapsules may be selected to provide the required properties of the formulation, in particular the rate of release of the fluroxypyr active ingredient from the microcapsules. The microcapsules may have a particle size in the range of from 0.5 to 60 microns, more preferably from 1 to 60 microns, still more preferably from 1 to 50 microns. A particle size range of from 1 to 40 microns, more preferably from 1 to 30 microns has been found to be particularly suitable.

The microcapsules may comprise the polymer in a suitable amount to provide the required properties of the formulation. Preferably, the polymer is present in an amount of from 2% to 25% by weight of the microcapsules, more preferably from 3 to 20%, still more preferably from 5 to 15% by weight. A particularly suitable amount of polymer in the microcapsules is in the range of from 5 to 12% by weight.

The formulation of the first aspect of the present invention comprises the microcapsules as described above suspended in a polyhydric alcohol ester solvent system. Details of the polyhydric alcohol ester solvent system forming the continuous phase of the formulation are as hereinbefore described in relation to the liquid composition retained within the microcapsules. The one or more polyhydric alcohol esters present in the continuous phase may be the same as those present within the microcapsules or may be different. Preferably, the same one or more polyhydric alcohol esters are present both in the continuous phase and within the microcapsules. If more than one polyhydric alcohol esters are present, they are preferably present in the same relative amounts both within the microcapsules and in the continuous phase.

The continuous phase comprises one or more polyhydric alcohol esters, together with other components required to impart the desired properties to the formulation, for example stability of the suspension and dispersibility of the microcapsules and the particles of sulfonylurea. Suitable components for inclusion in the continuous phase of the formulation are known in the art and are commercially available. Suitable components are those that improve and maintain the dispersibility and suspension of the microcapsules and sulfonylurea particles, and include one or more surfactants, stabilizers, emulsifiers, viscosity modifiers, protective colloids, and the like.

The continuous phase may make up any suitable amount of the formulation, provided the microcapsules and particles of sulfonylurea are well dispersed and maintained in suspension. Typically, the continuous phase comprises from 5 to 50% by weight of the formulation, more preferably from 10 to 40%, still more preferably from 15 to 30%.

The total amount of polyhydric alcohol ester in the composition of the present invention, that is the sum of the ester both inside the microcapsules and in the continuous phase surrounding the microcapsules may be in the range of from 1 to 95% by weight, preferably from 1 to 90% by weight, more preferably from 5 to 90% by weight.

As noted above, the continuous liquid phase contains a suspension of both the aforementioned microcapsules and particles of one or more sulfonylurea. Herbicidally active sulfonylureas are well known in the art and are commercially available compounds. The formulation of the present invention may contain any available compounds. The formulation of the present invention may contain any suitable sulfonylurea. Examples of suitable sulfonylureas include amidosulfuron, azimsulfuron, bensulfuron, chlorimuron, chlorsulfuron, cinosulfuron, cyclosulfamuron, ethametsulfuron, ethoxysulfuron, flazasulfuron, flupyrslfuron, foramsulfuron, halosulfuron, imazosulfuron, iodosulfuron, mesosulfuron, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron and mixtures thereof.

The composition of the present invention may have any suitable pH. Preferably, the composition is acidic, more preferably having a pH of less than 6, still more preferably having a pH of less than 5.

In a further aspect, the present invention provides a method for preparing a herbicidal composition, the method comprising the steps of:
i) providing a water-immiscible liquid phase comprising a polyhydric alcohol ester, an active compound that is solid at room temperature and with melting point below 190°C, and a first wall forming component;
ii) providing an aqueous phase comprising water and, optionally, one or more surface active agents;
iii) combining the water immiscible phase with the aqueous phase to form a dispersion of the water-immiscible phase in the continuous aqueous phase;
iv) adding a second wall forming component to the resulting mixture, causing interfacial polymerization of the first and second wall forming water-immiscible phase;
v) providing a suspension of a sulfonylurea in a polyhydric alcohol ester, optionally with one or more dispersants; and
vi) combining the composition prepared in step (iv) with the composition prepared in step (v).

In the method of the present invention, a water-immiscible liquid phase is formed comprising the polyhydric alcohol ester, the active compound that is solid at room temperature and with melting point below 190°C, such as fluroxpyr, a wall forming component, such as an isocyanate, and optionally one or more surface active agents. Separately, an aqueous composition of water and, optionally, one or more surface active agents is prepared and combined with the water-immiscible liquid phase under conditions of shear, to form a uniform emulsion of the water-immiscible phase dispersed in the continuous aqueous phase. A further wall forming material, such as an amine, is then added to the resulting mixture, with agitation, to form a polymer wall surrounding the droplets of the dispersed water-immiscible phase by interfacial polymerization. The resulting composition may be subjected to a curing stage, for example by heating the composition, in order to harden the walls of the microcapsules. The resulting product may be filtered, to provide a stable CS formulation. Curing typically takes place at a temperature of from 30 to 60°C, more preferably from 40 to 50°C, for a suitable length of time, typically from 1 to 5 hours, more typically from about 2 to 4 hours.

A suspension concentrate (SC) if one or more sulfonylureas in one or more polyhydric alcohol ester is formed. The polyhydric ester composition is preferably the same as that used to prepare the water-immiscible phase. The suspension concentrate (SC) composition may be prepared in known manner. For example, the sulfonylurea active ingredient, together with one or more suitable dispersants and other additives, such as an antifreezing agent and/or an antifoaming agent, and a required amount of the polyhydric alcohol ester may be initially mixed well and finely milled using a horizontal agitating bead mill.

Finally, the formulation of encapsulated active ingredient (CS) and the suspension concentrate of the sulfonyl urea (SC) are combined, for example with mixing, to form the composition of the present invention, in which both the microcapsules and the finely divided sulfonylurea are suspended in the continuous phase of one or more polyhydric alcohol esters.

Water present in the composition may be removed. More preferably, water present in the composition is emulsified within the polyhydric alcohol ester solvent system within the sulfonylurea suspension concentrate (SC) to form a dispersion of water droplets within the solvent, with the aid of one or more surfactants present in the composition.

The composition of the present invention may be used in known manner to control the growth of plants. In particular, the formulation may be diluted with water to the required concentration of active ingredient and applied to a locus in known manner, such as by spraying.

In a further aspect, the present invention provides the use of a herbicidal composition as hereinbefore described in the control of plant growth.

In a still further aspect, the present invention provides a method of controlling plant growth at a locus, the method comprising applying to the locus a composition as hereinbefore described.

Embodiments of the present invention will now be described, for illustration only, by way of the following examples.

### Example 1

A herbicidal composition comprising fluroxypyr (250g/L) and thifensulfuron (10g/L) was prepared having the following composition:

| Ingredient | Composition (%) |
|---|---|
| | |
| Atlox 4913 | 4.08 |
| Citric acid | 0.05 |
| Catalyst (Triethyl amine 20% emulsion) | 0.1 |
| Water | 13.18 |
| Sub-Total | 17.41 |
| | |
| | |
| Fluroxypyr | 22.23 |
| PAPI | 1.35 |
| dipropylene glycol dibenzoate | 10.00 |
| Sub-Total | 33.58 |
| | |
| | |
| Atlox 4913 | 16.77 |
| Dispersing Agent LFH | 0.30 |
| Antifoam | 0.16 |
| Urea | 8.40 |
| Thifensulfuron-methyl | 0.97 |
| dipropylene glycol dibenzoate | 21.41 |
| Sub-Total | 50.01 |
| | |
| TOTAL | 100 |

The PAPI, fluroxypyr and dipropylene glycol dibenzoate were combined with stirring to form a uniform liquid mixture. A solution of Atlox 4913 in water was heated in a Warning blender cup to about 50°C. The solution was agitated while the liquid mixture was slowly added, to form a uniform emulsion of the water immiscible phase dispersed evenly throughout the continuous aqueous phase. The aqueous solution of triethyl amine was added slowly, upon which interfacial polymerization occurred, producing microcapsules having a particle size of from 1 to 30 microns. Once the polymerization reaction had finished, the resulting composition was cured by heating to 50°C for 2 hours. The resulting product was cooled and filtered, to obtain a stable CS formulation of microencapsulated fluroxypyr.

Atlox 4913, dispersing agent LFH, antifoam agent, urea, thifensulfuron-methyl and dipropylene glycol dibenzoate were combined with mixing and finely milled to form a suspension concentrate (SC) of thifensulfuron-methyl active ingredient in dipropylene glycol dibenzoate.

Finally, the CS formulation of microencapsulated fluroxypyr and the SC formulation of thifensulfuron-methyl were combined with mixing, to form a stable composition, with both microencapsulated fluroxypyr and thifensulfuron-methyl suspended in a continuous phase of dipropylene glycol dibenzoate.

A test on the storage stability on the final composition was performed with the following results:
The composition was tested for its stability after storage in the containers and at the temperatures indicated in Table 1.

**Table 1.**

| Test item | Initial | Glass 54°C after storage | Plastic 54°C after storage | Glass 0°C after storage | Plastic 0°C after storage |
|---|---|---|---|---|---|
| Content of fluroxypyr wt% | 22.3 | 21.4 | 21.8 | 21.45 | 21.77 |
| Content of thifensulfuron-methyl wt-% | 1.02 | 0.98 | 0.99 | 1.01 | 1.02 |

By way of comparison, an equivalent formuation comprising fluroxypyr and thifensulfuron-methyl in the same amounts was prepared by omitting the dipropylene glycol dibenzoate and using the teaching of EP 1 844 653. The resulting composition was subjected to the same storage stability tests as described above, with the results set out in Table 2.

**Table 2.**

| Test item | Initial | Glass 54°C after storage | Plastic 54°C after storage | Glass 0°C after storage | Plastic 0°C after storage |
|---|---|---|---|---|---|
| Cotent of fluroxypyr wt% | 22.3 | 19.4 | 16.8 | 18.45 | 19.77 |
| Content of thifensulfuron -methyl wt-% | 1.05 | 0.87 | 0.88 | 0.79 | 0.76 |

From a comparison of the results in Tables 1 and 2, it can be seen that formulating with dipropylene glycol dibenzoate according to the present invention provided a composition having a significantly increased storage stability.

The physicochemical properties of the composition of the present invention prepared in Example 1 were tested. The results are set out in Table 3.

**Table 3.**

| Test item | Initial | Glass 54°C after storage | Plastic 54°C after storage | Glass 0oC after storage | Plastic 0°C after storage |
|---|---|---|---|---|---|
| pH value | 4.6 | 4.8 | 4.8 | 4.8 | 4.8 |
| Density | 1.1267 | 1.1245 | 1.1256 | 1.1267 | 1.1287 |
| Suspensibility [wt-%] | 91 | 92 | 91 | 90 | 91 |
| Dispersiblity [wt-%] | 99 | 99 | 99 | 98 | 98 |
| Wettability [sec] | 0 | 0 | 0 | 0 | 0 |
| Persistent foam[ml] | 0 | 0 | 0 | 0 | 0 |

From the results set out in Table 3, it can be seen that the composition of Example 1 prepared according to the present invention exhibited the following advantageous properties:
1. A very good dispersion of the microcapsules;
2. A very high compatibility with an SC, in which the same liquids can be used to formulate the active ingredient within the microcapsules and in the continuous phase;
3. A very high dispersibility;
4. A very low wet sieve residue;
5. An almost invisible unencapsulated active sulfonylurea material; and
6. A high formulation stability.

## Claims

1. A herbicidal composition comprising microcapsules containing a solution of at least one herbicidally active compound that is solid at room temperature and with a melting point below 190°C, said herbicidally active compound being other than a sulfonylurea, in a polyhydric alcohol ester solvent system; the microcapsules being suspended in a continuous phase of a polyhydric alcohol solvent system having suspended therein finely divided particles of one or more sulfonylureas.

2. The herbicidal composition according to claim 1, wherein the polyhydric alcohol ester solvent system consists of one or more polyhydric alcohol esters;
preferably wherein the polyhydric alcohol ester solvent system comprises one or more esters selected from dipropylene glycol dibenzoate, diethylene glycol dibenzoate, ethylene glycol diacetate, diethylene glycol diacetate, triethylene glycol diacetate, stearic acid pentaerythritol ester, polyethylene glycol 400 distearic acid ester, polyethylene glycol 6000 distearic acid ester, glycerol triacetate, glycol diacetate.

3. The herbicidal composition according to any preceding claim, wherein the herbicidally active compound that is solid at room temperature and with melting point below 190°C is a pyridinoxy acid herbicide;
preferably wherein the pyridinoxy acid herbicide is fluroxypyr.

4. The herbicidal composition according to any preceding claim, wherein the herbicidally active compound that is solid at room temperature and with melting point below 190°C is present in an amount of at least 10% by weight, more preferably at least 15%, still more preferably at least 20%.

5. The herbicidal composition according to any preceding claim, wherein the weight ratio of the herbicidally active compound that is solid at room temperature and with melting point below 190°C to the polyhydric alcohol ester solvent is from 1:10 to10:1, more preferably from 1:5 to 5:1, still more preferably from 3:1 to 1:3, still more preferably about 2:1.

6. The herbicidal composition according to any preceding claim, wherein the polyhydric alcohol ester solvent is preferably present in the liquid within the microcapsules in an amount of at least 10% by weight, more preferably at least 20% by weight, still more preferably at least 30% by weight.

7. The herbicidal composition according to any preceding claim, wherein the walls of the microcapsules are formed from a porous condensate polymer of one or more of a polyurea, polyamide or amide-urea copolymer;
preferably wherein the walls of the microcapsules are formed from a polyurea formed by the interfacial polymerization of an isocyanate and an amine;
more preferably wherein the isocyanate is selected from polymethylene polyphenyl isocyanate (PMPPI), methylene diphenyl isocyanate (MDI), polymeric methylene diphenyl isocyanate (PADI), and toluene diisocyanate (TDI); and/or wherein the amine is selected from ethylenediamine (EDA), diethyltriamine (DETA), triethylenetetramine (TETA), 1,6-hexamine (HAD), and triethylamine (TEA).

8. The herbicidal composition according to any preceding claim, wherein the microcapsules have a particle size the range of from 0.5 to 60 microns, more preferably from 1 to 60 microns, still more preferably from 1 to 50 microns, still more preferably from 1 to 40 microns, still more preferably from 1 to 30 microns.

9. The herbicidal composition according to any preceding claim, wherein the polymer is present in the microcapsules in an amount from 2% to 25% by weight of the microcapsules, more preferably from 3 to 20%, still more preferably from 5 to 15% by weight, still more preferably from 5 to 12% by weight.

10. The herbicidal composition according to any preceding claim, wherein the polyhydric alcohol ester solvent system within the microcapsules comprises the same polyhydric alcohol esters as the continuous phase.

11. The herbicidal composition according to any preceding claim, wherein the continuous phase comprises from 5 to 50% by weight of the formulation, more preferably from 10 to 40%, still more preferably from 15 to 30%.

12. The herbicidal composition according to any preceding claim, wherein the total amount of polyhydric alcohol ester in the composition of the present invention, that is the sum of the ester both inside the microcapsules and in the continuous phase surrounding the microcapsules, is in the range of from 1 to 95% by weight, preferably from 1 to 90% by weight, more preferably from 5 to 90% by weight.

13. The herbicidal composition according to any preceding claim, wherein the sulfonylurea is selected from amidosulfuron, azimsulfuron, bensulfuron, chlorimuron, chlorsulfuron, cinosulfuron, cyclosulfamuron, ethametsulfuron, ethoxysulfuron, flazasulfuron, flupyrsulfuron, foramsulfuron, halosulfuron, imazosulfuron, iodosulfuron, mesosulfuron, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron and mixtures thereof.

14. The herbicidal composition according to any preceding claim, wherein the pH is acidic, preferably less than 6, more preferably less than 5.

15. A method for preparing a herbicidal composition, the method comprising the steps of:
i) providing a water-immiscible liquid phase comprising a polyhydric alcohol ester, an active compound that is solid at room temperature and with melting point below 190°C, and a first wall forming component;
ii) providing an aqueous phase comprising water and, optionally, one or more surface active agents;
iii) combining the water immiscible phase with the aqueous phase to form a dispersion of the water-immiscible phase in the continuous aqueous phase;
iv) adding a second wall forming component to the resulting mixture, causing interfacial polymerization of the first and second wall forming components and thereby encapsulate the droplets of the water-immiscible phase;
v) providing a suspension of a sulfonylurea in a polyhydric alcohol ester, optionally with one or more dispersants; and
vi) combining the composition prepared in step (iv) with the composition prepared in step (v).

16. The use of a herbicidal composition according to any of claims 1 to 14 in the control of plant growth.

17. A method of controlling plant growth at a locus, the method comprising applying to the locus a composition according to any of claims 1 to 14.

## Patentansprüche

1. Herbizide Zusammensetzung, umfassend Mikrokapseln, die eine Lösung von mindestens einem herbizid aktiven Wirkstoff umfassen, der bei Raumtemperatur und mit einem Schmelzpunkt unterhalb von 190° C, wobei die herbizid wirksame Verbindung anders als ein Sulfonylharnstoff, in einem mehrwertigen Alkoholester-Lösungsmittelsystem ist; wobei die Mikrokapseln in einer kontinuierlichen Phase aus einem mehrwertigen Alkohol-Lösungsmittelsystem supendiert sind, das darin fein verteilte Teilchen eines oder mehrerer Sulfonylharnstoffe suspendiert hat.

2. Herbizide Zusammensetzung nach Anspruch 1, wobei das mehrwertige Alkoholester-Lösungsmittelsystem aus einem oder mehreren mehrwertigen Alkoholestern besteht;
wobei das mehrwertige Alkoholester-Lösungsmittelsystem vorzugsweise einen oder mehrere Ester umfasst, die von Dipropylenglykoldibenzoat, Diethylenglykoldibenzoat, Ethylenglykoldiacetat, Diethylenglykoldiacetat, Triethylenglykoldiacetat, Stearinsäure-Pentaerythritolester, Polyethylenglykol 400 Distearinsäureester, Polyethylenglykol 6000 Distearinsäureester, Glycerintriacetat, Glykoldiacetat ausgewählt sind.

3. Herbizide Zusammensetzung nach einem der vorhergehenden Ansprüche, wobei die herbizid wirksame Verbindung, die bei Raumtemperatur fest ist und mit einem Schmelzpunkt unter 190°C ein Pyridinoxysäureherbizid ist;
wobei das Pyridinoxysäureherbizid vorzugsweise Fluroxypyr ist.

4. Herbizide Zusammensetzung nach einem der vorhergehenden Ansprüche, wobei die herbizid wirksame Verbindung, die bei Raumtemperatur fest ist und mit einem Schmelzpunkt unter 190° C in einer Menge von mindestens 10 Gewichts% bevorzugter mindestens 15 Gewichts%, noch mehr bevorzugt mindestens 20 Gewichts% vorhanden ist.

5. Herbizide Zusammensetzung nach einem der vorhergehenden Ansprüche, wobei das Gewichtsverhältnis der herbizid wirksamen Verbindung, die bei Raumtemperatur fest ist und mit einem Schmelzpunkt unter 190° C zu dem mehrwertigen Alkoholester-Lösungsmittel von 1:10 bis 10 : 1, bevorzugter von 1:5 bis 5:1, noch mehr bevorzugt von 3:1 bis 1:3, noch mehr bevorzugt etwa 2: 1 ist.

6. Herbizide Zusammensetzung nach einem der vorhergehenden Ansprüche, wobei das mehrwertige Alkoholester-Lösungsmittel in der Flüssigkeit innerhalb der Mikrokapseln vorzugsweise in einer Menge von mindestens 10 Gewichts%, bevorzugter mindestens 20 Gewichts%, noch mehr bevorzugt mindestens 30 Gewichts% vorhanden ist.

7. Herbizide Zusammensetzung nach einem der vorhergehenden Ansprüche, wobei die Wände der Mikrokapseln aus einem porösen Kondensationspolymer aus einem oder mehreren von einem Polyharnstoff, Polyamid oder Amidharnstoffcopolymer gebildet sind;
wobei die Wände der Mikrokapseln vorzugsweise aus einem Polyharnstoff gebildet sind, die von der Grenzflächenpolymerisation eines Isocyanats und eines Amins gebildet sind;
bevorzugter wobei das Isocyanat von Polymethylen-Polyphenyl-Isocyanat (PMPPI), Methylendiphenyldiisocyanat (MDI), polymerem Methylendiphenylisocyanat (PADI) und Toluoldiisocyanat (TDI) ausgewählt ist; und/oder wobei das Amin von Ethylendiamin (EDA), Diethyltriamin (DETA), Triethylentetramin (TETA), 1,6-Hexamin (HAD) und Triethylamin (TEA) ausgewählt ist.

8. Herbizide Zusammensetzung nach einem der vorhergehenden Ansprüche, wobei die Mikrokapseln eine Teilchengröße in dem Bereich von 0,5 bis 60 Mikrometer, bevorzugter von 1 bis 60 Mikrometer, noch mehr bevorzugt von 1 bis 50 Mikrometer, besonders bevorzugt von 1 bis 40 Mikrometer , noch mehr bevorzugt von 1 bis 30 Mikrometer haben.

9. Herbizide Zusammensetzung nach einem der vorhergehenden Ansprüche, wobei das Polymer in den Mikrokapseln in einer Menge von 2 Gewichts% bis 25 Gewichts% der Mikrokapseln vorhanden ist, bevorzugter von 3 bis 20%, noch mehr bevorzugt von 5 bis 15 Gewichts%, noch mehr bevorzugt von 5 bis 12 Gewichts%.

10. Herbizide Zusammensetzung nach einem der vorhergehenden Ansprüche, wobei das mehrwertige Alkoholester-Lösungsmittelsystem in den Mikrokapseln die gleichen mehrwertigen Alkoholester wie die kontinuierliche Phase umfasst.

11. Herbizide Zusammensetzung nach einem der vorhergehenden Ansprüche, wobei die kontinuierliche Phase von 5 bis 50 Gewichts% der Formulierung, bevorzugter von 10 bis 40%, noch mehr bevorzugt von 15 bis 30% umfasst.

12. Herbizide Zusammensetzung nach einem der vorhergehenden Ansprüche, wobei die Gesamtmenge des mehrwertigen Alkoholesters in der Zusammensetzung der vorliegenden Erfindung ist, dass heist, die Summe des Esters sowohl in den Mikrokapseln und in der kontinuierlichen Phase, die die Mikrokapseln umgibt, in dem Bereich von 1 bis 95 Gewichts% ist, bevorzugter 1 bis 90 Gewichts%, noch mehr bevorzugt von 5 bis 90 Gewichts%.

13. Herbizide Zusammensetzung nach einem der vorhergehenden Ansprüche, wobei der Sulfonylharnstoff von Amidosulfuron, Azimsulfuron, Bensulfuron, Chlorimuron, Chlorsulfuron, Cinosulfuron, Cyclosulfamuron, Ethametsulfuron, Ethoxysulfuron, Flazasulfuron, Flupyrsulfuron, Foramsulfuron, Halosulfuron, Imazosulfuron, lodosulfuron, Mesosulfuron, Nicosulfuron , Oxasulfuron, Primisulfuron, Prosulfuron Pyrazosulfuron, Rimsulfuron, Sulfometuron, Sulfosulfuron, Thifensulfuron, Triasulfuron, Tribenuron, Trifloxysulfuron, Triflusulfuron, Tritosulfuron und Mischungen davon ausgewählt ist.

14. Herbizide Zusammensetzung nach einem der vorhergehenden Ansprüche, wobei der pH-Wert sauer ist, vorzugsweise weniger als 6, bevorzugter weniger als 5.

15. Verfahren zur Herstellung einer herbiziden Zusammensetzung, wobei das Verfahren die folgenden Schritte umfasst:
i) Bereitstellen einer mit Wasser nicht mischbaren flüssigen Phase, umfassend einen mehrwertigen Alkoholester, eine aktive Verbindung, die bei Raumtemperatur fest ist und mit einem Schmelzpunkt unter 190°C, und eine erste wandbildende Komponente;
ii) Bereitstellen einer wässrigen Phase, umfassend Wasser und gegebenenfalls ein oder mehrere oberflächenaktive Mittel;
iii) Vereinigen der nicht mit Wasser mischbaren Phase mit der wässrigen Phase, um eine Dispersion der nicht mit Wasser mischbaren Phase in der kontinuierlichen wässrigen Phase zu bilden;
iv) Zugabe eines zweiten wandbildenden Komponente zu der resultierenden Mischung, wodurch Grenzflächenpolymerisation der ersten und zweiten wandbildenden Komponenten und damit Verkapselung der Tröpfchen der mit Wasser nicht mischbaren Phase verursacht wird;
v) Bereitstellen einer Suspension eines Sulfonylharnstoffis in einem mehrwertigen Alkoholester, gegebenenfalls mit einem oder mehreren Dispergiermitteln, und
vi) Kombinieren der in Schritt (iv) hergestellten Zusammensetzung mit der in Schritt (v) hergestellten Zusammensetzung.

16. Verwendung einer herbiziden Zusammensetzung nach einem der Ansprüche 1 bis 14 bei der Kontrolle von Pflanzenwachstum.

17. Verfahren zur Kontrolle von Pflanzenwachstum an einem Ort, wobei das Verfahren umfasst, eine Zusammensetzung nach einem der Ansprüche 1 bis 14 an dem Ort anzuwenden.

## Revendications

1. Composition herbicide comprenant des microcapsules contenant une solution d'au moins un composé herbicide actif qui est solide à température ambiante et qui a un point de fusion inférieur à 190 °C, ledit composé herbicide actif n'étant pas une sulfonylurée, dans un système de solvant à base d'esters d'alcools polyhydriques ; les microcapsules étant suspendues dans une phase continue du système de solvant à base d'alcools polyhydriques qui contient des particules finement divisées suspendues d'une ou de plusieurs sulfonylurées.

2. Composition herbicide selon la revendication 1, dans laquelle le système de solvant à base d'esters d'alcools polyhydriques est constitué par un ou plusieurs esters d'alcools polyhydriques ;
le système de solvant à base d'esters d'alcools polyhydriques comprenant de préférence un ou plusieurs esters choisis parmi le dibenzoate de dipropylène glycol, le dibenzoate de diéthylène glycol, le diacétate d'éthylène glycol, le diacétate de diéthylène glycol, le diacétate de triéthylène glycol, l'ester de pentaérythritol de l'acide stéarique, l'ester de l'acide distéarique de polyéthylène glycol 400, l'ester de l'acide distéarique de polyéthylène glycol 6000, le triacétate de glycérol, le diacétate de glycol.

3. Composition herbicide selon l'une quelconque des revendications précédentes, dans laquelle le composé herbicide actif qui est solide à température ambiante et qui a un point de fusion inférieur à 190 °C est un herbicide acide pyridinoxy ;
l'herbicide acide pyridinoxy étant de préférence le fluroxypyr.

4. Composition herbicide selon l'une quelconque des revendications précédentes, dans laquelle le composé herbicide actif qui est solide à température ambiante et qui a un point de fusion inférieur à 190 °C est présent en une quantité d'au moins 10 % en poids, plus préférablement d'au moins 15%, encore plus préférablement d'au moins 20 %.

5. Composition herbicide selon l'une quelconque des revendications précédentes, dans laquelle le rapport en poids entre le composé herbicide actif qui est solide à température ambiante et qui a un point de fusion inférieur à 190 °C et le solvant à base d'esters d'alcools polyhydriques est de 1:10 à 10:1, plus préférablement de 1:5 à 5:1, encore plus préférablement de 3:1 à 1:3, encore plus préférablement d'environ 2:1.

6. Composition herbicide selon l'une quelconque des revendications précédentes, dans laquelle le solvant à base d'esters d'alcools polyhydriques est de préférence présent dans le liquide dans les microcapsules en une quantité d'au moins 10 % en poids, plus préférablement d'au moins 20 % en poids, encore plus préférablement d'au moins 30 % en poids.

7. Composition herbicide selon l'une quelconque des revendications précédentes, dans laquelle les parois des microcapsules sont formées par un polymère condensé poreux d'une polyurée, d'un polyamide et/ou d'un copolymère d'amide-urée ;
les parois des microcapsules étant de préférence formées par une polyurée formée par polymérisation interfaciale d'un isocyanate et d'une amine ;
l'isocyanate étant plus préférablement choisi parmi l'isocyanate de polyméthylène-polyphényle (PMPPI), l'isocyanate de méthylène-diphényle (MDI), l'isocyanate de méthylène-diphényle polymère (PADI) et le diisocyanate de toluène (TDI) ; et/ou l'amine étant choisie parmi l'éthylène-diamine (EDA), la diéthyltriamine (DETA), la triéthylène-tétramine (TETA), la 1,6-hexamine (HAD) et la triéthylamine (TEA).

8. Composition herbicide selon l'une quelconque des revendications précédentes, dans laquelle les microcapsules ont une taille de particule dans la plage allant de 0,5 à 60 microns, plus préférablement de 1 à 60 microns, encore plus préférablement de 1 à 50 microns, encore plus préférablement de 1 à 40 microns, encore plus préférablement de 1 à 30 microns.

9. Composition herbicide selon l'une quelconque des revendications précédentes, dans laquelle le polymère est présent dans les microcapsules en une quantité de 2 % à 25 % en poids des microcapsules, plus préférablement de 3 à 20 %, encore plus préférablement de 5 à 15 % en poids, encore plus préférablement de 5 à 12 % en poids.

10. Composition herbicide selon l'une quelconque des revendications précédentes, dans laquelle le système de solvant à base d'esters d'alcools polyhydriques dans les microcapsules comprend les mêmes esters d'alcools polyhydriques que la phase continue.

11. Composition herbicide selon l'une quelconque des revendications précédentes, dans laquelle la phase continue comprend de 5 à 50 % en poids de la formulation, plus préférablement de 10 à 40 %, encore plus préférablement de 15 à 30 %.

12. Composition herbicide selon l'une quelconque des revendications précédentes, dans laquelle la quantité totale de l'ester d'alcool polyhydrique dans la composition de la présente invention, c'est-à-dire la somme de l'ester dans les microcapsules et dans la phase continue entourant les microcapsules, est dans la plage allant de 1 à 95 % en poids, préférablement de 1 à 90 % en poids, plus préférablement de 5 à 90 % en poids.

13. Composition herbicide selon l'une quelconque des revendications précédentes, dans laquelle la sulfonylurée est choisie parmi l'amidosulfurone, l'azimsulfurone, la bensulfurone, la chloroimurone, la chlorosulfurone, la cinosulfurone, la cyclosulfamurone, l'éthamétsulfurone, l'éthoxysulfurone, la flazasulfurone, la flupyrsulfurone, la foramsulfurone, l'halosulfurone, l'imazosulfurone, l'iodosulfurone, la mésosulfurone, la nicosulfurone, l''oxasulfurone, la primisulfurone, la prosulfurone, la pyrazosulfurone, la rimsulfurone, la sulfométurone, la sulfosulfurone, la thifensulfurone, la triasulfurone, la tribénurone, la trifloxysulfurone, la triflusulfurone, la tritosulfurone et leurs mélanges.

14. Composition herbicide selon l'une quelconque des revendications précédentes, dans laquelle le pH est acide, de préférence inférieur à 6, plus préférablement inférieur à 5.

15. Procédé de préparation d'une composition herbicide, le procédé comprenant les étapes suivantes :
i) la préparation d'une phase liquide non miscible dans l'eau comprenant un ester d'alcool polyhydrique, un composé actif qui est solide à température ambiante et qui a un point de fusion inférieur à 190 °C, et un premier composant formant une paroi ;
ii) la préparation d'une phase aqueuse comprenant de l'eau et éventuellement un ou plusieurs agents tensioactifs ;
iii) la combinaison de la phase non miscible avec l'eau avec la phase aqueuse pour former une dispersion de la phase non miscible avec l'eau dans la phase aqueuse continue ;
iv) l'ajout d'un second composant formant une paroi au mélange réactionnel, provoquant une polymérisation interfaciale du premier et du second composant formant une paroi, et encapsulant ainsi les gouttelettes de la phase non miscible avec l'eau ;
v) la préparation d'une suspension d'une sulfonylurée dans un ester d'alcool polyhydrique, éventuellement avec un ou plusieurs dispersants ; et
vi) la combinaison de la composition préparée à l'étape (iv) avec la composition préparée à l'étape (v).

16. Utilisation d'une composition herbicide selon l'une quelconque des revendications 1 à 14 pour la suppression de la croissance de végétation.

17. Procédé de suppression de la croissance de végétation à un emplacement, le procédé comprenant l'application à l'emplacement d'une composition selon l'une quelconque des revendications 1 à 14.
